# EUROPÄISCHE PATENTSCHRIFT

(11) **EP 1 925 818 B1**
(45) Veröffentlichungstag und Bekanntmachung des Hinweises auf die Patenterteilung: **09.01.2019**
(21) Anmeldenummer: 07022094.2
(22) Anmeldetag: 14.11.2007
(51) Int. Cl.: F03D 1/06

(54) **Rotor einer Windenergieanlage mit einem Schott**
Wind turbine rotor with bulkhead
Rotor d'une éolienne avec cloison

(30) Priorität: 21.11.2006 DE 102006055091
(43) Veröffentlichungstag der Anmeldung: 28.05.2008
(73) Patentinhaber: Senvion GmbH, 22297 Hamburg (DE)
(72) Erfinder: Bendel, Urs, 24787 Fockbek (DE); Eusterbarkey, Carsten, 25813 Simonsberg (DE); Quell, Peter, 24783 Osterrönfeld (DE)
(74) Vertreter: Wallinger Ricker Schlotter Tostmann

(56) Entgegenhaltungen:
- EP-A- 1 596 064
- WO-A-00/60719
- WO-A-2004/090326
- WO-A1-2006/069575
- DE-A1- 10 337 534
- DE-A1-102004 057 979
- DE-U1- 29 817 382
- DE-U1-202004 003 521

## Beschreibung

Die Erfindung betrifft ein Rotorblatt einer Windenergieanlage.

Windenergieanlagen sind im Stand der Technik bekannt. Hierbei weisen die Windenergieanlagen mindestens ein Rotorblatt auf, das an einer Rotornabe angeordnet ist. In der Blattwurzel des Rotorblatts ist aus Sicherheitsgründen ein Schott ausgebildet, so dass bei Wartungsarbeiten in der Rotornabe oder im Rotorblatt Personal bei entsprechender Positionierung auf dem Schott steht und Wartungsarbeiten durchführen kann.

Um aus der Rotornabe in das Rotorblatt zu gelangen, verfügt das Schott in der Regel über eine Luke bzw. eine Durchsteigeluke in der Mitte des Schotts.

In WO-A-2004/090326 ist eine Rotornabe für einen Rotor einer Windenergieanlage beschrieben, wobei die Rotornabe wenigstens zwei Versteifungsstege ("stiffening webs") aufweist, die integriert mit einem rotierenden Hohlkörper ausgebildet ist.

DE-A-103 37 534 offenbart überdies einen Windenergiekonverter mit einer Rotornabe, deren Triebstrang am Eintritt in einen Gondelkopf über wenigstens ein Rotorlager am Maschinenträger abgestützt wird, wobei das Rotorlager derartige Abmessungen aufweist, dass mit seinem Innenring eine Durchsteigeöffnung zum Innenraum der Rotornabe geschaffen ist.

Des Weiteren ist in WO-A-00/60719 ein Generator für eine Windmühle beschrieben. Außerdem beschreibt DE-U-298 17 382 einen Sicherheitskorb zum Einsteigen in eine Rotornabe einer Windenenergieanlage. Ferner ist in EP-A-1 596 064 eine Windenenergieanlage offenbart, wobei eine Blattflanschversteifung einer Nabe eine Blattflanschverstärkung mit einem Mannloch aufweist.

Darüber hinaus ist in DE-U-20 2004 003 521 eine Rotornabe für eine Windenergieanlage offenbart, wobei die Rotornabe als innen begehbares Hohlteil ausgebildet ist. Ferner ist ein Ringflansch zur Befestigung eines innen begehbaren Rotorflügels vorgesehen, wobei vorgesehen ist, dass die Rotornabe ein im Bereich ihres Ringflansches angeordnetes Aussteifungsschott aufweist. Dazu ist weiterhin vorgesehen, dass das Aussteifungsschott wenigstens eine in den Rotorflügel einmündende Durchsteigeöffnung aufweist.

Außerdem ist in WO-A-2006/069575 ein Rotorblatt für eine Windenergieanlage offenbart, wobei das Rotorblatt einen Hohlraum aufweist, in dem eine Einrichtung zum Auffangen von Staub, Partikeln oder losen Gegenständen aus dem Hohlraum vorhanden ist, wobei die Auffangeinrichtung mindestens einen Behälter mit mindestens einer Öffnung zum Aufnehmen von losen Gegenständen aufweist.

Darüber hinaus ist in DE-A-10 2004 057 979 ein Rotorblatt für eine Windenergieanlage offenbart, das mit einer Laminat aufweisenden Rotorblattschale mit wenigstens einer Innenseite ausgebildet ist und eine auf der Innenseite angeordnete Feuchtigkeit abweisende Schutzschicht aufweist,

Ausgehend von diesem Stand der Technik besteht die Aufgabe der vorliegenden Erfindung darin, ein Rotorblatt einer Windenergieanlage auf einfache Weise weiterzubilden, wobei die Sicherheit für das Wartungspersonal erhöht werden soll.

Die Lösung der Aufgabe erfolgt durch ein Rotorblatt einer Windenergieanlage gemäß Anspruch 1 mit einem Schott, das in der Blattwurzel eines Rotorblatts angeordnet ist oder wird, wobei das Schott wenigstens zwei Durchsteigeöffnungen aufweist, wobei die Durchsteigeöffnungen über Lukenklappen verfügen und verschließbar ausgebildet sind.

Dadurch, dass wenigstens zwei Durchsteigeöffnungen im Schott im Durchgang zwischen der Rotornabe und dem Rotorblatt ausgebildet sind, ist es beispielsweise möglich, dass bei Verunfallung einer Person, die durch eine Durchsteigeöffnung in das Rotorblatt eingestiegen ist, eine Rettungsperson über die zweite Durchsteigeöffnung in das Rotorblatt einsteigt, um die verunfallte Person zu retten. Hierdurch ergibt sich eine schnellere und einfachere Möglichkeit, Personen aus dem Rotorblatt zu retten. Dadurch werden die Sicherheitsmassnahmen an einer Windenergieanlage wesentlich erhöht.

Die Durchsteigeöffnungen sind jeweils so dimensioniert, dass eine Person beispielsweise aus der Rotornabe in das Rotorblatt bei entsprechender Stellung des Rotorblatts steigen bzw. gelangen kann. Um sicher auf dem Schott zu stehen, verfügen die Durchsteigeöffnungen über entsprechende Lukenklappen, so dass das Schott als Arbeitsplattform bei Wartungsarbeiten dient.

Darüber hinaus wird der Zugang zu Rotorblättern aus der Rotornabe erleichtert, wenn mehrere Durchsteigeöffnungen am Schott vorgesehen sind, da beispielsweise beim Herstellen von großen Rotornaben und großen Rotorblättern, beispielsweise mit einem Blattwurzeldurchmesser von etwa 3 m, die Zugangsmöglichkeiten und somit die Wartung erleichtert werden.

Hierbei sind die Durchsteigeluken an entsprechenden bevorzugten Orten, vorzugsweise außerhalb der Mitte des Schotts, angeordnet, so dass Wartungspersonal auf einfache Weise eine Verschlussluke an der Durchsteigeöffnung öffnen und durch diese in das Rotorblatt einsteigen kann. Insbesondere sind die Durchsteigeöffnungen derart platziert, dass der Zugang entsprechend vereinfacht wird.

Darüber hinaus ist in einer bevorzugten Ausführungsform vorgesehen, dass wenigstens eine Durchsteigeöffnung außerhalb der Mitte des Schotts oder zwischen der Mitte des Schotts und dem Rand des Schotts angeordnet ist. Unter der Mitte des Schotts wird der Punkt verstanden, durch den die Rotorblattdrehachse oder die Rotorblattlängsachse quer, insbesondere senkrecht, zur Ebene des Schotts verläuft.

Ein erleichterter Zugang zu den Rotorblättern ergibt sich insbesondere dann, wenn mehrere Durchsteigeöffnungen am äußeren Rand des Schotts ausgebildet oder vorgesehen sind.

Besonders ist es bevorzugt, wenn wenigstens zwei Durchsteigeöffnungen, bezogen auf die Mitte des Schotts oder die Drehachse des Rotorblatts, um einen vorbestimmten Winkel zwischen 45° und 180° zueinander versetzt angeordnet sind. Bevorzugte Winkel zwischen zwei Durchsteigeöffnungen sind insbesondere Winkel von 90° und 180°.

Eine vereinfachte Wartung eines Rotorblatts ergibt sich dann, wenn die Durchsteigeöffnungen im Bereich der Nase des Rotorblatts und/oder im Bereich der Druckseite des Rotorblatts und/oder im Bereich der Saugseite des Rotorblatts, vorzugsweise am Rand des Rotorblatts, angeordnet sind oder werden.

Insbesondere ist das Schott kreisförmig ausgebildet, wobei das Schott über entsprechende Flanschverbindungen oder dergleichen mit dem Rotorblatt und/oder der Rotornabe verbunden sind oder werden.

Ein vorteilhaftes Schott mit mehreren Durchsteigeöffnungen ergibt sich insbesondere dann, wenn das Schott einen Durchmesser von mehr als 2 m, insbesondere mehr als 2,5 m, vorzugsweise mehr als 3,0 m aufweist. Dadurch ist es möglich, dass auch größere Windenergieanlagen, bei denen die Rotorblätter einen Rotorblattdurchmesser von mehr als 2 m, 2,5 m oder 3 m oder mehr haben, mit einem Schott versehen werden, wodurch die Wartung der Rotorblätter oder auch die Rettung von verunfallten Personen vereinfacht wird.

Erfindungsgemäß sind die Durchsteigeöffnungen verschließbar ausgebildet. Entsprechende Schließeinrichtungen sind dem Fachmann geläufig und bekannt.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Darstellung einer Windenergieanlage und
- Fig. 2: eine perspektivische Ansicht eines Rotorblatts mit einem erfindungsgemäßen Schott.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

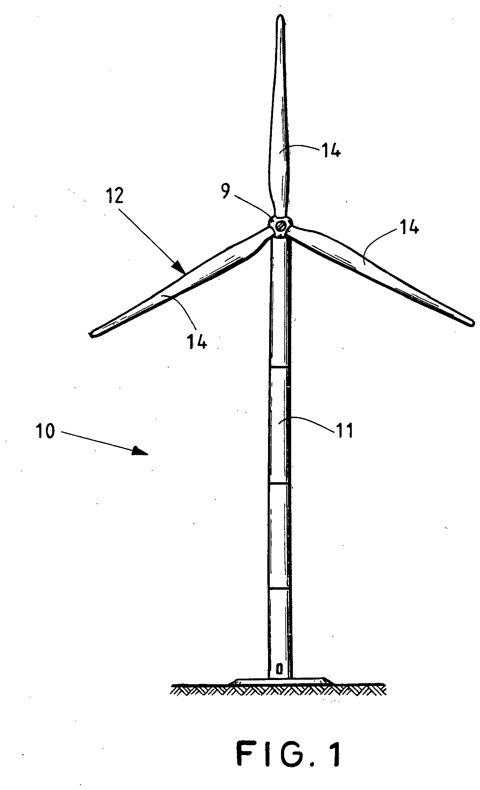

Fig. 1 zeigt eine schematische Darstellung einer Windenergieanlage 10. Die Windenergieanlage 10 weist einen Turm 11 auf und einen Rotor 12, der drei Rotorblätter 14 umfasst, die auf einer Rotornabe angebracht sind. Die Rotornabe 9 ist mit einer Rotorwelle verbunden. Bei Windanfall dreht sich der Rotor 12 in an sich bekannter Weise. Hierdurch kann Leistung von einem an den Rotor 12 bzw. an den über die Rotornabe 9 und die Rotorwelle 13 angeschlossenen Generator erzeugt werden und in ein Verbrauchernetz abgegeben werden.

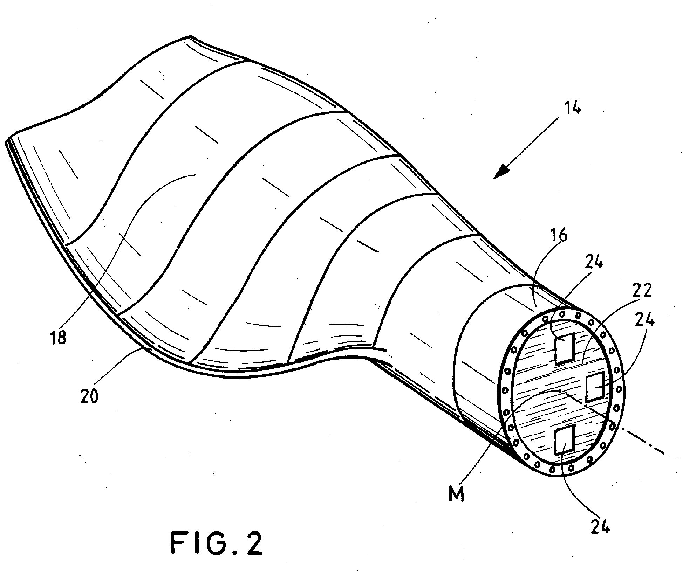

Fig. 2 zeigt einen unteren Abschnitt des Rotorblatts 14 in einer perspektivischen Darstellung. Das Rotorblatt 14 verfügt auf der der Rotornabe zugewandten Seite über eine so genannte Rotorblattwurzel 16, die im Querschnitt im Allgemeinen kreisförmig bzw. kreisrund ausgebildet ist. Das Rotorblatt 14 selbst ist im Innenraum hohl. Das Rotorblatt 14 ist zwischen der Rotorblattwurzel 16 und der Rotorblattspitze profiliert ausgebildet und verfügt über eine Druckseite 18. Der Druckseite 18 ist auf der hier nicht bezeichneten gegenüber liegenden Seite die dazugehörige Saugseite zugeordnet.

Die entsprechenden Rotorblattprofile entlang der Längsachse des Rotorblatts 14 laufen an der Hinterkante 20 des Rotorblatts 14 zusammen. Im Bereich der Rotorblattwurzel 16 ist ein Schott 22 in dem Rotorblatt 14 angeordnet, wobei es in einer Ausgestaltung möglich ist, das Schott 22 in die Rotorblattwurzel 16 einzukleben. Das Schott 22 ist fest an der Rotorblattwurzel 16 montiert oder darin eingesetzt.

Das Schott 22 ist ebenfalls kreisförmig ausgebildet und verfügt über drei Durchsteigeöffnungen 24, die außerhalb des Mittelpunkts M des Schotts 22 angeordnet sind. Die Durchsteigeöffnungen 24 sind so dimensioniert, dass eine Person nach Öffnung einer Luke an der Durchsteigeöffnung 24 von der Rotornabe in den Innenraum des Rotorblatts 14 steigen kann.

Dadurch, dass mehrere Durchsteigeöffnungen am Schott 22 ausgebildet sind, wird ein einfacher und sicherer Ein- bzw. Ausgang an den Rotorblättern 14 auch bei großen Durchmessern der Rotorblattwurzel 16, beispielsweise größer als 2 m oder 2,5 m oder 3,0 m sichergestellt.

Durch das Schott 22 wird ein Hineinfallen von Gegenständen oder von Personen aus der Rotornabe in das Rotorblatt 14 verhindert sowie das Rotorblatt 14 gegenüber der Rotornabe bezüglich Schmutz und/oder Feuchtigkeit abgedichtet. Gleichzeitig kann das Schott 22 als entsprechende Arbeitsplattform bei Wartungsarbeiten an der Rotornabe oder am Rotorblatt 14 eingesetzt werden. Die Durchsteigeöffnungen 24 sind am äußeren Umfang des Schotts 22 verteilt angeordnet, wobei die Durchsteigeöffnungen 24 um einen Winkel von 90° versetzt angeordnet sind. Dadurch ist es möglich, beispielsweise die Durchsteigeöffnungen 24 in einer entsprechenden 12 Uhr-, 3 Uhr- und 6 Uhr-Position (bzw. 3 Uhr-, 6 Uhr-, 9 Uhr-Position) anzuordnen, wenn das Rotorblatt 14 zu Wartungsarbeiten mit der Vorderkante, d.h. mit der Anströmseite bei horizontal angeordnetem Rotorblatt 14 an der Windenergieanlage gelagert ist. Diese Positionen entsprechen den Anordnungen der Durchsteigeöffnungen im Bereich der Druckseite, der Nase und der Saugseite.

Darüber hinaus ist in Fig. 2 die Drehachse 26 des Rotorblatts 14 mit einer strich-punktierten Linie eingezeichnet, die senkrecht das Schott 22 im Punkt M im geometrischen Sinne durchsticht.

### Bezugszeichenliste

- 9: Rotornabe
- 10: Windenergieanlage
- 11: Turm
- 12: Rotor
- 14: Rotorblatt
- 16: Rotorblattwurzel
- 18: Druckseite
- 20: Hinterkante
- 22: Schott
- 24: Durchsteigeöffnung
- M: Mittelpunkt

## Patentansprüche

1. Rotorblatt (14) einer Windenergieanlage (10) mit einem Schott (22), das in der Blattwurzel (16) des Rotorblatts (14) angeordnet ist, wobei das Schott (22) wenigstens zwei Durchsteigeöffnungen (24) aufweist, wobei die Durchsteigeöffnungen (24) über Lukenklappen verfügen und verschließbar ausgebildet sind.

2. Rotorblatt (14) nach Anspruch 1, **dadurch gekennzeichnet, dass** wenigstens eine Durchsteigeöffnung (24) außerhalb der Mitte des Schotts (22) oder zwischen der Mitte des Schotts (22) und dem Rand des Schotts (22) angeordnet ist.

3. Rotorblatt (14) nach Anspruch 1 oder 2, **dadurch gekennzeichnet, dass** mehrere Durchsteigeöffnungen (24) am Rand des Schotts (22) ausgebildet sind.

4. Rotorblatt (14) nach einem der Ansprüche 1 bis 3, **dadurch gekennzeichnet, dass** wenigstens zwei Durchsteigeöffnungen (24), bezogen auf die Mitte (M) des Schotts (22), um einen vorbestimmten Winkel zwischen 45° und 180° zueinander versetzt angeordnet sind.

5. Rotorblatt (14) nach einem der Ansprüche 1 bis 4, **dadurch gekennzeichnet, dass** die Durchsteigeöffnungen (24) im Bereich der Nase des Rotorblatts (14) und/oder im Bereich der Druckseite (18) des Rotorblatts (14) und/oder im Bereich der Saugseite des Rotorblatts (14), vorzugsweise am Rand des Rotorblatts (14), angeordnet sind oder werden.

6. Rotorblatt (14) nach einem der Ansprüche 1 bis 5, **dadurch gekennzeichnet, dass** das Schott (22) kreisförmig ausgebildet ist.

7. Rotorblatt (14) nach einem der Ansprüche 1 bis 6, **dadurch gekennzeichnet, dass** das Schott (22) einen Durchmesser von mehr als 2 m, insbesondere mehr als 2,5 m, vorzugsweise mehr als 3,0 m aufweist.

## Claims

1. A rotor blade (14) of a wind energy installation (10) with a bulkhead (22) which is arranged in the blade root (16) of the rotor blade (14), wherein the bulkhead (22) comprises at least two access openings (24), wherein the access openings (24) comprise hatch flaps and are formed in a closable manner.

2. The rotor blade (14) according to claim 1, **characterized in that** at least one access opening (24) is arranged outside the center of the bulkhead (22) or between the center of the bulkhead (22) and the edge of the bulkhead (22).

3. The rotor blade (14) according to claim 1 or 2, **characterized in that** several access openings (24) are arranged at the peripheral edge of the bulkhead (22).

4. The rotor blade (14) according to any one of the claims 1 to 3, **characterized in that**, in relation to the center (M) of the bulkhead (22), at least two access openings (24) are arranged offset with respect to each other at a predetermined angle between 45° and 180°.

5. The rotor blade (14) according to any one of the claims 1 to 4, **characterized in that** the access openings (24) are arranged or become arranged in the area of the nose of the rotor blade (14) and/or in the area of the pressure side (18) of the rotor blade (14) and/or in the area of the suction side of the rotor blade (14), preferably at the peripheral edge of the rotor blade (14).

6. The rotor blade (14) according to any one of the claims 1 to 5, **characterized in that** the bulkhead (22) is formed in a circular shape.

7. The rotor blade (14) according to any one of the claims 1 to 6, **characterized in that** the bulkhead (22) has a diameter of more than 2 m, in particular more than 2.5 m, preferably more than 3.0 m.

## Revendications

1. Pale de rotor (14) d'une éolienne (10) avec une cloison (22), qui est disposée dans la racine de pale (16) de la pale de rotor (14), dans laquelle la cloison (22) présente au moins deux ouvertures de passage (24), dans laquelle les ouvertures de passage (24) disposent de trappes à lucarne et sont réalisées de manière à pouvoir être fermées.

2. Pale de rotor (14) selon la revendication 1, **caractérisée en ce qu'**au moins une ouverture de passage (24) est disposée à l'extérieur du centre de la cloison (22) ou entre le centre de la cloison (22) et le bord de la cloison (22).

3. Pale de rotor (14) selon la revendication 1 ou 2, **caractérisée en ce que** plusieurs ouvertures de passage (24) sont réalisées au niveau du bord de la cloison (22).

4. Pale de rotor (14) selon l'une quelconque des revendications 1 à 3, **caractérisée en ce qu'**au moins deux ouvertures de passage (24) sont disposées de manière décalée les unes par rapport aux autres par rapport au centre (M) de la cloison (22) d'un angle prédéfini compris entre 45° et 180°.

5. Pale de rotor (14) selon l'une quelconque des revendications 1 à 4, **caractérisée en ce que** les ouvertures de passage (24) se situent ou sont disposées dans la zone du nez de la pale de rotor (14) et/ou dans la zone du côté de pression (18) de la pale de rotor (14) et/ou dans la zone du côté d'aspiration de la pale de rotor (14), de préférence au niveau du bord de la pale de rotor (14).

6. Pale de rotor (14) selon l'une quelconque des revendications 1 à 5, **caractérisée en ce que** la cloison (22) est réalisée de manière à présenter une forme de cercle.

7. Pale de rotor (14) selon l'une quelconque des revendications 1 à 6, **caractérisée en ce que** la cloison (22) présente un diamètre de plus de 2 m, en particulier de plus de 2,5 m, de préférence de plus de 3,0 m.
